# EUROPEAN PATENT SPECIFICATION

(11) **EP 3 564 907 B1**
(45) Date of publication and mention of the grant of the patent: **08.05.2024**
(21) Application number: 17886678.6
(22) Date of filing: 20.12.2017
(51) Int. Cl.: G06T 17/00, G06T 19/20

(54) **METHOD, DEVICE, AND SYSTEM FOR CONSTRUCTING THREE-DIMENSIONAL MODEL**
METHODE, VORRICHTUNG UND SYSTEM FÜR DIE KONSTRUKTION EINES DREIDIMENSIONALEN MODELLS
PROCÉDÉ, DISPOSITIF ET SYSTÈME DE CONSTRUCTION DE MODÈLE TRIDIMENSIONNEL

(30) Priority: 29.12.2016 CN 201611245387
(43) Date of publication of application: 06.11.2019
(73) Proprietor: Alibaba Group Holding Limited, Grand Cayman (KY)
(72) Inventor: ZHANG, Zhe, Hangzhou, Zhejiang 311121 (CN)
(74) Representative: Finnegan Europe LLP
(86) International application number: PCT/CN2017/117356
(87) International publication number: WO 2018/121367

(56) References cited:
- CN-A- 101 916 299
- CN-A- 102 201 129
- CN-A- 102 957 748
- CN-A- 103 902 757
- CN-A- 103 971 414
- CN-A- 105 225 268
- CN-A- 105 528 808

## Description

### Technical Field

Embodiments of this application relate to the field of three-dimensional model construction, and in particular, to a three-dimensional model constructing method, apparatus, and electronic device. The embodiments of this application also relate to a three-dimensional model constructing method, apparatus, and electronic device, as well as a three-dimensional model constructing system.

### Background Art

In the field of virtual reality application technologies, three-dimensional scenario models are used frequently to construct virtual worlds having a sense of reality. Different users for a scenario have their own reprocessing requirements, so there are generally multiple pieces of model data for the same scenario, and all the model data needs to be stored in a scenario model base to allow the different users to share and recreate the scenario models.

At present, a scenario model is built mainly by a single-party building technology. That is, a model maker modifies existing scenario model data (hereinafter referred to as original model data) using a three-dimensional modeling tool (e.g., a modeling tool such as 3D Studio MAX), and then stores the whole scenario model data of a new model formed after the modification in a scenario model base. Data of different models is completely separate in this model building technology, and even for a small change on a scenario model, a piece of complete data of the modified scenario model needs to be stored additionally. Therefore, a large storage space will be consumed when this technology is used. Moreover, any user can edit randomly the original model data, and the maker of the original model cannot achieve control over limits to model modification, e.g., for a case where some parts are unmodifiable, by subsequent users.

Therefore, how to research and develop a new three-dimensional model constructing method that can reduce scenario model base storage pressure and control the manner of modifying a scenario model is a technical problem to be solved in this field.

CN 102957748 relates to a three-dimensional scenic dynamic updating method and system.

### Summary of the Invention

The present invention is defined by the independent claim. Specific embodiments are defined by the dependent claims. The embodiments of this application provide a three-dimensional model constructing method and apparatus, thus solving the problem of high scenario model base storage pressure in the prior art. The embodiments of this application further provide another three-dimensional model constructing method, apparatus, and electronic device, as well as a three-dimensional model constructing system.

A omputer implemented three-dimensional model constructing method is provided in the embodiments of this application, comprising:
receiving a first model submission request for a newly-built three-dimensional model sent by a first user client terminal, wherein the newly-built three-dimensional model is constructed based on an original three-dimensional model, and modification information of the newly-built three-dimensional model relative to the original three-dimensional model is carried by the first model submission request; and
storing the model identifier of the original three-dimensional model and the modification information as model data of the newly-built three-dimensional model.

Optionally, before the receiving of a first model submission request for a newly-built three-dimensional model sent by a first user client terminal, the method further comprises:
receiving a model acquisition request for the original three-dimensional model sent by the first user client terminal;
acquiring model data of the original three-dimensional model; and
returning the model data of the original three-dimensional model to the first user client terminal.

Optionally, the acquiring of model data of the original three-dimensional model includes:
acquiring, according to the model identifier of the original three-dimensional model, a model identifier of a three-dimensional model on which the construction of the original three-dimensional model is based as well as modification information of the original three-dimensional model relative to the based three-dimensional model;
acquiring model data of the based three-dimensional model according to the model identifier of the based three-dimensional model; and
generating the model data of the original three-dimensional model according to the model data of the based three-dimensional model and the modification information relative to the based three-dimensional model.

Optionally, after the receiving of a model acquisition request for the original three-dimensional model sent by the first user client terminal and before the returning of the model data of the original three-dimensional model to the first user client terminal, the method further comprises:
acquiring modification limit information of the original three-dimensional model; and
the returning of the model data of the original three-dimensional model to the first user client terminal is implemented by:
   returning the model data of the original three-dimensional model and the modification limit information of the three-dimensional model to the first user client terminal.

Optionally, the model data of the original three-dimensional model is collected in the following steps:
receiving a second model submission request for the original three-dimensional model sent by a second user client terminal, wherein the second model submission request includes the model data of the original three-dimensional model;
generating the model identifier of the original three-dimensional model; and
storing a record of correspondence between the model identifier of the original three-dimensional model and the model data of the original three-dimensional model.

Optionally, the modification limit information of the original three-dimensional model is further carried by the second model submission request; and
the method further comprises:
storing the modification limit information of the original three-dimensional model.

Optionally, modification limit information of the newly-built three-dimensional model is further carried by the first model submission request; and
the method further comprises:
storing the modification limit information of the newly-built three-dimensional model.

Optionally, the modification limit information includes information of at least one unmodifiable model component.

Optionally, the modification information includes at least one piece of the following modification information: model data and location information corresponding to a new component, a component identifier of a deleted component, and a component identifier of a modified component and modified model data.

Optionally, the model identifier of the original three-dimensional model is further carried by the first model submission request.

Optionally, the model data of the original three-dimensional model is further carried by the first model submission request; and
before the storing of the model identifier of the original three-dimensional model and the modification information as model data of the newly-built three-dimensional model, the method further comprises:
generating a model identifier of the original three-dimensional model; and
storing a record of correspondence between the model identifier of the original three-dimensional model and the model data of the original three-dimensional model.

Correspondingly, this application further provides a first three-dimensional model constructing apparatus, comprising:
a receiving unit configured to receive a first model submission request for a newly-built three-dimensional model sent by a first user client terminal, wherein the newly-built three-dimensional model is constructed based on an original three-dimensional model, and modification information of the newly-built three-dimensional model relative to the original three-dimensional model is carried by the first model submission request; and
a storage unit configured to store the model identifier of the original three-dimensional model and the modification information as model data of the newly-built three-dimensional model.

Correspondingly, this application further provides an electronic device, comprising:
a processor; and
a memory configured to store a program for implementing a three-dimensional model constructing method, wherein the device performs the following steps after it is powered on and the program of the three-dimensional model constructing method is run through the processor:
   receiving a first model submission request for a newly-built three-dimensional model sent by a first user client terminal, wherein the newly-built three-dimensional model is constructed based on an original three-dimensional model, and modification information of the newly-built three-dimensional model relative to the original three-dimensional model is carried by the first model submission request; and
   storing the model identifier of the original three-dimensional model and the modification information as model data of the newly-built three-dimensional model.

Moreover, this application further provides a three-dimensional model constructing method, comprising:
receiving a model submission instruction for a newly-built three-dimensional model submitted by a user, wherein the newly-built three-dimensional model is constructed based on an original three-dimensional model;
acquiring modification information of the newly-built three-dimensional model relative to the original three-dimensional model; and
sending to a server a model submission request for the newly-built three-dimensional model, wherein the modification information of the newly-built three-dimensional model relative to the original three-dimensional model is carried by the first model submission request.

Optionally, before the receiving of a model submission request for a newly-built three-dimensional model submitted by a user, the method further comprises:
sending to the server a model acquisition request for the original three-dimensional model; receiving model data of the original three-dimensional model returned by the server; and
presenting the original three-dimensional model according to the received model data.

Optionally, the receiving of model data of the original three-dimensional model returned by the server is implemented by:
receiving the model data of the original three-dimensional model and the modification limit information of the original three-dimensional model returned by the server.

Optionally, the presenting of the original three-dimensional model according to the received model data includes:
acquiring a component identifier of an unmodifiable model component in the original three-dimensional model according to the modification limit information; and
presenting the original three-dimensional model according to the received model data, and setting the unmodifiable model component to an unmodifiable state during presentation of the original three-dimensional model.

Optionally, after the receiving of a model submission instruction for a newly-built three-dimensional model submitted by a user, the method further comprises:
judging according to the modification limit information whether the unmodifiable model component in the original three-dimensional model is modified; and if yes, providing the user with prompt information about out-of-limit modification.

Optionally, the received model data includes model-referenced model data; and
the presenting of the original three-dimensional model according to the received model data includes:
parsing the received model data to obtain parsed model data; and
presenting the original three-dimensional model according to the parsed model data.

Optionally, the presenting of the original three-dimensional model according to the received model data is implemented by:
presenting a virtual-reality original three-dimensional model according to the received model data.

Optionally, before the sending of a model submission request for the newly-built three-dimensional model to the server, the method further comprises:
acquiring modification limit information of the newly-built three-dimensional model;
wherein correspondingly, the modification limit information of the newly-built three-dimensional model is further carried by the model submission request.

Optionally, the modification limit information includes information of at least one unmodifiable model component.

Optionally, the modification information includes at least one piece of the following modification information: model data and location information corresponding to a new component, a component identifier of a deleted component, and a component identifier of a modified component and modified model data.

Correspondingly, this application further provides a second three-dimensional model constructing apparatus, comprising:
a model data editing unit configured to construct the newly-built three-dimensional model based on an original three-dimensional model;
a model submission instruction receiving unit configured to receive a model submission instruction for the newly-built three-dimensional model submitted by a user;
a modification information acquisition unit configured to acquire modification information of the newly-built three-dimensional model relative to the original three-dimensional model; and
a model submission request sending unit configured to send to a server a model submission request for the newly-built three-dimensional model, wherein the modification information of the newly-built three-dimensional model relative to the original three-dimensional model is carried by the first model submission request.

Optionally, the apparatus further comprises:
a model acquisition request sending unit configured to send to the server a model acquisition request for the original three-dimensional model;
a model data receiving unit configured to receive model data of the original three-dimensional model returned by the server; and
an original three-dimensional model presentation unit configured to present the original three-dimensional model according to the received model data.

Optionally, the model data receiving unit is specifically configured to receive the model data of the original three-dimensional model and the modification limit information of the original three-dimensional model returned by the server; and
the apparatus further comprises:
a detection prompting unit configured to judge according to the modification limit information whether an unmodifiable model component in the original three-dimensional model is modified; and if yes, provide the user with prompt information about out-of-limit modification.

Correspondingly, this application further provides an electronic device, comprising:
a processor; and
a memory configured to store a program for implementing the three-dimensional model constructing method, wherein the device performs the following steps after it is powered on and the program of the three-dimensional model constructing method is run through the processor:
   receiving a model submission instruction for a newly-built three-dimensional model submitted by a user, wherein the newly-built three-dimensional model is constructed based on an original three-dimensional model;
   acquiring modification information of the newly-built three-dimensional model relative to the original three-dimensional model; and
   sending to the server a model submission request for the newly-built three-dimensional model, wherein the modification information of the newly-built three-dimensional model relative to the original three-dimensional model is carried by the first model submission request.

Moreover, this application further provides a three-dimensional model constructing system, comprising: the first three-dimensional model constructing apparatus, and the second three-dimensional model constructing apparatus.

Compared with the prior art, the embodiments of this application have the following advantages.

In the three-dimensional model constructing method according to the embodiments of this application, a model submission request for a newly-built three-dimensional model sent by a user client terminal is received, wherein the newly-built three-dimensional model is constructed based on an original three-dimensional model; and modification information of the newly-built three-dimensional model relative to the original three-dimensional model as well as the model identifier of the original three-dimensional model are stored as model data of the newly-built three-dimensional model. Three-dimensional model data is stored hierarchically by referenced storage in this processing manner, and thus the pressure of storing a three-dimensional model can be reduced effectively.

By using the three-dimensional model constructing method according to the embodiments of this application, modification limit information of the newly-built three-dimensional model can further be carried by a model submission request and then stored. In this processing manner, a user cannot edit the model randomly while constructing a new model based on the model. Therefore, the manner of modifying the three-dimensional model can be controlled effectively.

### Brief Description of the Drawings

FIG. 1 is a flowchart of an embodiment of a three-dimensional model constructing method according to an embodiment of this application;
FIG. 2 is a specific flowchart of an embodiment of a three-dimensional model constructing method according to an embodiment of this application;
FIG. 3 is a schematic diagram of data storage in an embodiment of a three-dimensional model constructing method according to an embodiment of this application;
FIG. 4 is a schematic diagram of an embodiment of a three-dimensional model constructing apparatus according to an embodiment of this application;
FIG. 5 is a schematic diagram of an embodiment of an electronic device according to an embodiment of this application;
FIG. 6 is a flowchart of another embodiment of a three-dimensional model constructing method according to an embodiment of this application;
FIG. 7 is a schematic diagram of another embodiment of a three-dimensional model constructing apparatus according to an embodiment of this application;
FIG. 8 is a specific schematic diagram of another embodiment of a three-dimensional model constructing apparatus according to an embodiment of this application;
FIG. 9 is a schematic diagram of another embodiment of an electronic device according to an embodiment of this application; and
FIG. 10 is a schematic diagram of an embodiment of a three-dimensional model constructing system according to an embodiment of this application.

### Detailed Description

Many specific details are described in the following descriptions to facilitate full understanding of this application. However, this application can be implemented in many other manners different from that described herein, and those skilled in the art may make similar generalizations without departing from the essence of this application. Therefore, this application is not limited by the specific implementations disclosed below.

A three-dimensional model constructing method, apparatus, and electronic device, another three-dimensional model constructing method, apparatus, and electronic device, and a three-dimensional model constructing system are provided in the embodiments of this application. They will be illustrated in detail one by one in the following embodiments.

The basic core idea of the three-dimensional model constructing method according to an embodiment of this application includes: receiving a model submission request for a newly-built three-dimensional model sent by a user client terminal, wherein the newly-built three-dimensional model is constructed based on an original three-dimensional model; and storing modification information of the newly-built three-dimensional model relative to the original three-dimensional model carried by the request, and the model identifier of the original three-dimensional model as model data of the newly-built three-dimensional model. Three-dimensional model data is stored hierarchically by referenced storage, and thus the pressure of storing a three-dimensional model can be reduced effectively.

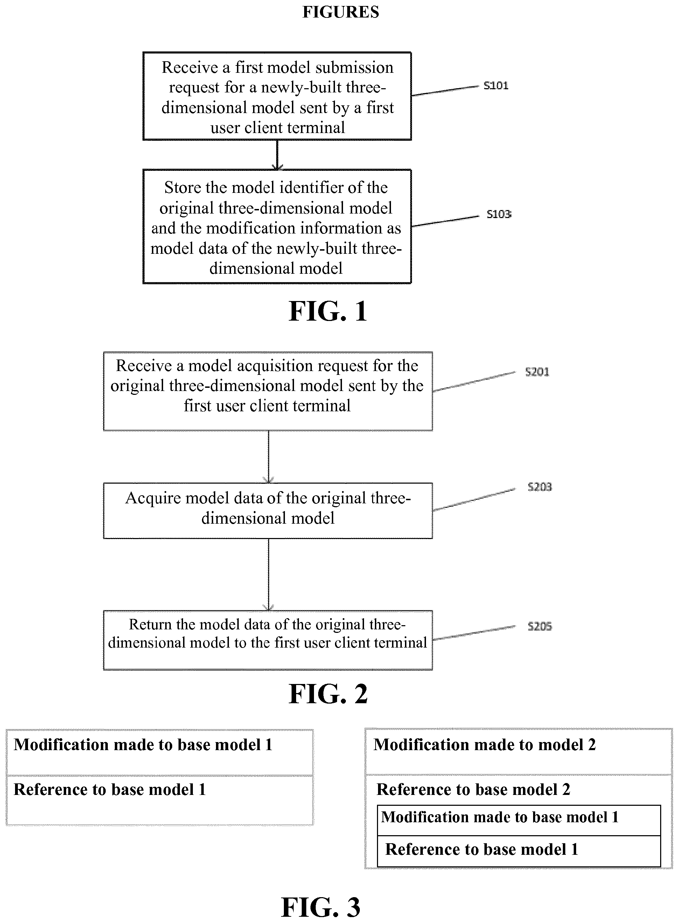

Referring to FIG. 1, a flowchart of an embodiment of a three-dimensional model constructing method according to an embodiment of this application is shown. The method includes the following steps.

In step S101, a first model submission request for a newly-built three-dimensional model sent by a first user client terminal is received.

The first user client terminal can be any type of device on which a three-dimensional modeling tool can run, e.g., a terminal device such as a personal computer and a notebook computer. A three-dimensional model constructed by applying the three-dimensional model constructing method according to the embodiment of this application is not merely limited to a scenario model of a virtual reality world, e.g., a three-dimensional model of a house structure; it can also be a three-dimensional model of a general object in a non-virtual reality world, e.g., a three-dimensional model of an engine component of a vehicle.

The newly-built three-dimensional model is constructed based on an original three-dimensional model. In other words, the original three-dimensional model is the base model of the newly-built three-dimensional model. The newly-built three-dimensional model can also be used as a base model, on which the construction of another newly-built three-dimensional model is based.

At the least, modification information of the newly-built three-dimensional model relative to the original three-dimensional model is carried by the first model submission request. The data of a complete three-dimensional model can consist of data of multiple model components. Therefore, the modification information includes, but is not limited to, at least one piece of the following modification information: model data corresponding to a new component of the newly-built three-dimensional model relative to the original three-dimensional model, and location information of the new component in the new three-dimensional model; a component identifier of a deleted component of the newly-built three-dimensional model relative to the original three-dimensional model; and a component identifier of a data-modified component of the newly-built three-dimensional model relative to the original three-dimensional model, and the modified model data.

Moreover, dependency information indicating that the newly-built three-dimensional model is constructed based on the original three-dimensional model further needs to be carried by the first model submission request. For example, the model identifier of the original three-dimensional model is carried by the first model submission request, or model data of the original three-dimensional model is carried directly, and the model data is specified as the model data of the original three-dimensional model.

The original three-dimensional model on which the first user bases the construction of the newly-built three-dimensional model in the first user client terminal can be an original three-dimensional model from a three-dimensional model base provided by a device in which the method according to the embodiment of this application is run, or a new original three-dimensional model constructed by the first user in the first user client terminal, or an original three-dimensional model imported by the first user into the first user client terminal from another device. The latter two types of original three-dimensional models are not stored in the three-dimensional model base, and thus can be referred to as new original three-dimensional models.

In this embodiment, the first user constructs a new model in the first user client terminal based on a three-dimensional model in the three-dimensional model base to form the newly-built three-dimensional model. In order to construct a new model based on a three-dimensional model in the three-dimensional model base, the first user client terminal first needs to acquire data of existing three-dimensional models in the three-dimensional model base.

The first user client terminal needs to acquire the three-dimensional models in the three-dimensional model base, and this can be implemented using the following specific steps: 1) sending a model acquisition request for the original three-dimensional model to a device (the device can be referred to as a server as it can provide existing three-dimensional model data to the user client terminal) in which the method according to the embodiment of this application is run; 2) receiving model data of the original three-dimensional model returned by the server; and 3) presenting the original three-dimensional model according to the received model data. Correspondingly, in the three-dimensional model constructing method according to the embodiment of this application, the model data of the original three-dimensional model needs to be returned to the first user client terminal according to the model acquisition request sent by the first user client terminal.

Referring to FIG. 2, a specific flowchart of an embodiment of a three-dimensional model constructing method according to an embodiment of this application is shown. In this embodiment, before step S 101, the method further includes the following steps.

In step S201, a model acquisition request for the original three-dimensional model sent by the first user client terminal is received.

Model identifier information of the original three-dimensional model is carried by the model acquisition request.

In step S203, model data of the original three-dimensional model is acquired.

A search is performed in a three-dimensional model base according to the model identifier of the original three-dimensional model, and model data of the original three-dimensional model is obtained..

It should be noted that the first user needs to construct a new model with a three-dimensional modeling tool (such as 3D Studio MAX or Maya). The three-dimensional modeling tool can only identify model data in a preset format, and the format of three-dimensional model data in the three-dimensional model base is a model-referenced format (i.e., one piece of three-dimensional model data includes model-referenced information and modification information). Therefore, the two types of data formats are inconsistent. As a result, the three-dimensional modeling tool cannot identify the three-dimensional model data in the three-dimensional model base. In order to open an existing three-dimensional model in the three-dimensional model base with the three-dimensional modeling tool to construct a new model based on the existing three-dimensional model, the data format of the acquired original three-dimensional model data needs to be converted in advance, thus converting the data format of the original three-dimensional model data in the three-dimensional model base into a data format identifiable by the three-dimensional modeling tool.

The processing step of converting the data format of the original three-dimensional model data in the three-dimensional model base into a data format identifiable by the three-dimensional modeling tool can be implemented in a device end on which the method according to the embodiment of this application is run, or can be implemented in the first user client terminal.

In this embodiment, the processing step of converting the data format of the original three-dimensional model data in the three-dimensional model base into a data format identifiable by the three-dimensional modeling tool is implemented in a device end on which the method according to the embodiment of this application is run. Therefore, in the method according to the embodiment of this application, step S203 can include the following specific steps: 1) acquiring, according to the model identifier of the original three-dimensional model carried by the model acquisition request, a model identifier of a three-dimensional model on which the construction of the original three-dimensional model is based as well as modification information of the original three-dimensional model relative to the based three-dimensional model; 2) acquiring model data of the based three-dimensional model according to the model identifier of the based three-dimensional model; and 3) generating model data of the original three-dimensional model according to the model data of the based three-dimensional model and the modification information relative to the based three-dimensional model. In this processing manner, the model data of the original three-dimensional model returned to the client terminal is model data identifiable by the three-dimensional modeling tool.

In step S205, the model data of the original three-dimensional model is returned to the first user client terminal.

After the model data of the original three-dimensional model is obtained through step S201 and step S203, the model data can be returned to the first user client terminal for loading and presentation, such that the first user can construct a new model based on the original three-dimensional model.

As a preferred solution, modification limit information of the three-dimensional model can further be stored in the three-dimensional model base to control the manner of modifying the original three-dimensional model. The modification limit information includes, but is not limited to: information of at least one unmodifiable model component, for example, load bearing wall parts in a three-dimensional model of a house structure marked as unmodifiable; or information of model data that is designated directly as unmodifiable, for example, data of load bearing wall parts in a three-dimensional model of a house structure marked as unmodifiable. The modification limit information can further include information defining how the model component is modified. For example, it is defined that the load bearing wall parts can merely have their color changed but cannot be deleted, etc.

In this case, before step S205, the method can further include the following step: acquiring modification limit information of the original three-dimensional model. Correspondingly, step S205 is implemented by: returning the model data of the original three-dimensional model and the modification limit information of the original three-dimensional model to the first user client terminal. The first user client terminal will present the original three-dimensional model according to the modification limit information of the original three-dimensional model, and set the three-dimensional model corresponding to the model components or the model data marked as unmodifiable to an unmodifiable state, or display the unmodifiable model components in a highlighted manner (e.g., in red) to remind the user that these components cannot be modified.

The function of returning the model data of the original three-dimensional model to the first user client terminal according to the model acquisition request is implemented through the foregoing steps S201 to step S205.

Moreover, if a new model is to be constructed based on a three-dimensional model in the three-dimensional model base, data of the model serving as the original three-dimensional model needs to be collected in advance. Therefore, the three-dimensional model constructing method according to the embodiment of this application can further include the following step: collecting model data of the original three-dimensional model.

During specific implementation, the model data of the original three-dimensional model can be collected in the following steps: 1) receiving a second model submission request for the original three-dimensional model sent by a second user client terminal, the second model submission request including the model data of the original three-dimensional model; 2) generating a model identifier of the original three-dimensional model; and 2) storing a record of correspondence between the model identifier of the original three-dimensional model and the model data of the original three-dimensional model.

The second user is generally different from the first user. The second user is the maker of the original three-dimensional model, and the first user is the user of the original three-dimensional model and can recreate the original three-dimensional model. For example, the second user is a property developer, and the user uses a three-dimensional modeling tool to construct three-dimensional model data of a house structure, and sends through a second user client terminal a model submission request for a three-dimensional model of the house structure to a device in which the method according to the embodiment of this application is run. In the method according to the embodiment of this application, first a model identifier is generated for the model after the request is received, and then a record of correspondence between the model identifier and the model data is stored in a three-dimensional model base for other users to share and recreate. For example, a decoration company as the first user can create a decorated model according to the original model, and a householder as the first user can add commodity model information provided by commodity sellers and the like to the decorated model.

As a preferred solution, modification limit information of the original three-dimensional model can also be carried by the second model submission request. Correspondingly, the three-dimensional model constructing method according to the embodiment of this application still needs to include the following step: storing modification limit information of the original three-dimensional model.

After the first model submission request for the newly-built three-dimensional model sent by the first user client terminal is received through step S101, the next step can be performed to store the model data of the newly-built three-dimensional model in a model-referenced format.

In step S103, the model identifier of the original three-dimensional model and the modification information are stored as model data of the newly-built three-dimensional model.

If the model identifier of the original three-dimensional model is carried by the first model submission request, the model identifier of the original three-dimensional model carried by the first model submission request and the modification information can be directly stored as the model data of the newly-built three-dimensional model in step S103.

If the model data of the original three-dimensional model is carried by the first model submission request, and information indicating that the model data is the model data of the original three-dimensional model is also carried, before step S103, the method can further include the following steps: 1) generating a model identifier of the original three-dimensional model; and 2) storing a record of correspondence between the model identifier of the original three-dimensional model and the model data of the original three-dimensional model.

Referring to FIG. 3, a schematic diagram of a data storage format in an embodiment of a three-dimensional model constructing method according to an embodiment of this application is shown. As can be seen from FIG. 3, each piece of model data includes two parts: reference information for a base model (original model), e.g., the model identifier of the base model, and information on modifications made to the base model, i.e., a model-referenced format.

Moreover, modification limit information of the newly-built three-dimensional model can also be carried by the first model submission request. In this case, the three-dimensional model constructing method according to the embodiment of this application can further include the following step: storing the modification limit information of the newly-built three-dimensional model. By storing the modification limit information of the newly-built three-dimensional model, the manner of modifying the newly-built three-dimensional model can be controlled when a new model is constructed subsequently based on the newly-built three-dimensional model.

A three-dimensional model constructing method is provided in the foregoing embodiment, and correspondingly, a three-dimensional model constructing apparatus is further provided in an embodiment of this application. The apparatus corresponds to the foregoing embodiment of the method.

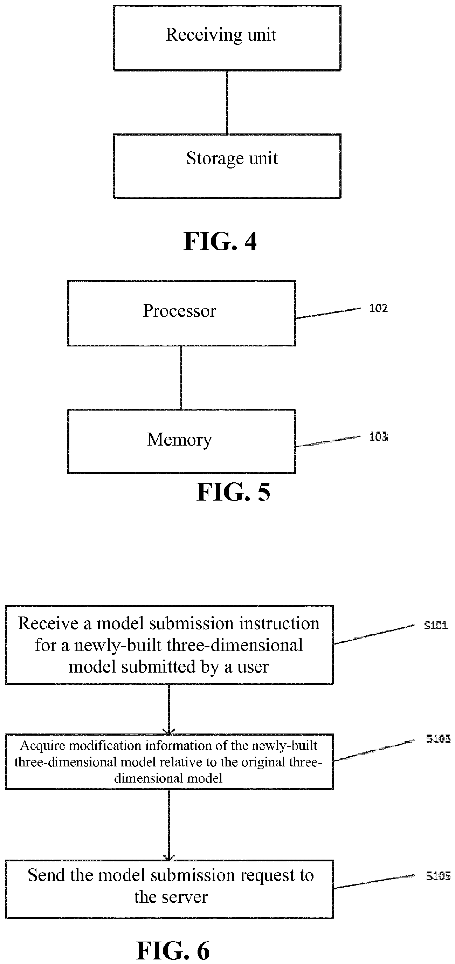

Referring to FIG. 4, a schematic diagram of an embodiment of a three-dimensional model constructing apparatus according to an embodiment of this application is shown. The apparatus embodiment is basically similar to the method embodiment, so it is described simply, and for related parts, it is sufficient to refer to the descriptions of the parts in the method embodiment. The apparatus embodiment described below is merely illustrative.

A three-dimensional model constructing apparatus in this embodiment includes:
a receiving unit configured to receive a first model submission request for a newly-built three-dimensional model sent by a first user client terminal, wherein the newly-built three-dimensional model is constructed based on an original three-dimensional model, and modification information of the newly-built three-dimensional model relative to the original three-dimensional model is carried by the first model submission request; and
a storage unit configured to store the model identifier of the original three-dimensional model and the modification information as model data of the newly-built three-dimensional model.

Referring to FIG. 5, a schematic diagram of an embodiment of an electronic device according to an embodiment of this application is shown. The device embodiment is basically similar to the method embodiment, so it is described simply, and for related parts, it is sufficient to refer to the descriptions of the parts in the method embodiment. The device embodiment described below is merely illustrative.

The electronic device in this embodiment includes: a processor 102; and a memory 103.

The memory 103 is configured to store a program for implementing a three-dimensional model constructing method, and the device performs the following steps after it is powered on and the program of the three-dimensional model constructing method is run through the processor:
receiving a first model submission request for a newly-built three-dimensional model sent by a first user client terminal, wherein the newly-built three-dimensional model is constructed based on an original three-dimensional model, and modification information of the newly-built three-dimensional model relative to the original three-dimensional model is carried by the first model submission request; and
storing the model identifier of the original three-dimensional model and the modification information as model data of the newly-built three-dimensional model.

Corresponding to the foregoing three-dimensional model constructing method, another three-dimensional model constructing method is further provided in an embodiment of this application. Referring to FIG. 6, a flowchart of another embodiment of a three-dimensional model constructing method according to an embodiment of this application is shown. Parts in this embodiment identical to those in the contents of the first embodiment will not be repeated, and reference can be made to the corresponding parts in Embodiment 1. Another three-dimensional model constructing method according to the embodiment of this application includes the following steps.

In step S101, a model submission instruction for a newly-built three-dimensional model submitted by a user is received.

The newly-built three-dimensional model is constructed based on the original three-dimensional model. Before the user submits the model submission instruction, a new model first needs to be constructed based on the original three-dimensional model through the three-dimensional modeling tool, thus forming the newly-built three-dimensional model.

During specific implementation, an existing three-dimensional modeling tool such as 3D Studio MAX or Maya can be used to construct the model. The two tools are currently mainstream three-dimensional modeling tools with respective advantages and disadvantages, and they can be selected reasonably for use according to actual requirements.

The original three-dimensional model on which the construction of the newly-built three-dimensional model is based can be an original three-dimensional model from the three-dimensional model base, or a new original three-dimensional model constructed by the user through a three-dimensional modeling tool, or an original three-dimensional model imported by the user into the user client terminal from another device. The latter two types of original three-dimensional models are not stored in the three-dimensional model base, and thus can be referred to as new original three-dimensional models.

In this embodiment, the user constructs a new model in the user client terminal based on a three-dimensional model in the three-dimensional model base to form the newly-built three-dimensional model. In order to construct a new model based on a three-dimensional model in the three-dimensional model base, the client terminal of the user first needs to acquire three-dimensional model data in the three-dimensional model base.

The client terminal of the user needs to acquire the three-dimensional model data in the three-dimensional model base, and this can be implemented using the following specific steps: 1) sending a model acquisition request for the original three-dimensional model to a device; 2) receiving model data of the original three-dimensional model returned by the server; and 3) presenting the original three-dimensional model according to the received model data.

If modification limit information of the original three-dimensional model is further stored in the server, the step of receiving model data of the original three-dimensional model returned by the server can be implemented by: receiving the model data of the original three-dimensional model and the modification limit information of the original three-dimensional model returned by the server. In this case, the step of presenting the original three-dimensional model according to the received model data can include the following specific steps :1) acquiring, according to the modification limit information, a component identifier of an unmodifiable model component in the original three-dimensional model or unmodifiable model data; and 2) presenting the original three-dimensional model according to the received model data, and setting the unmodifiable model component to an unmodifiable state during presentation of the original three-dimensional model.

If the server does not convert the data format of the original three-dimensional model data in the three-dimensional model base into a data format identifiable by the three-dimensional modeling tool, the model data received by the user client terminal will be model-referenced model data. That is, the model data includes a model identifier of a three-dimensional model on which the construction of the original three-dimensional model is based as well as modification information of the original three-dimensional model relative to the based three-dimensional model. In this case, the step of the user client terminal presenting the original three-dimensional model according to the received model data can include the following specific steps: 1) parsing the received model data to obtain parsed model data; and 2) presenting the original three-dimensional model according to the parsed model data.

The step of parsing the received model data to obtain parsed model data can be implemented by: first acquiring model data of the based three-dimensional model according to the model identifier of the based three-dimensional model; and then generating model data of the original three-dimensional model according to the model data of the based three-dimensional model and the modification information of the original three-dimensional model relative to the based three-dimensional model. After the data format of the original three-dimensional model data is converted into a data format identifiable by the three-dimensional modeling tool, the original three-dimensional model can be presented in the three-dimensional modeling tool, and thus the user can build a new model based on the model.

As a preferred solution, the step of presenting the original three-dimensional model according to the received model data can be implemented by: presenting a virtual-reality original three-dimensional model according to the received model data.

In an actual application, a virtual-reality original three-dimensional model can be presented to the user regardless of the data source of the original three-dimensional model. During specific implementation, a single-field-pattern model and a double-field-pattern model of the original three-dimensional model can be presented on the same screen, and the user viewing the original three-dimensional model by a virtual reality display device can experience the original three-dimensional model having a sense of space, and can further modify the original three-dimensional model by a virtual reality input device to construct a new model. Moreover, the manner of modifying the new model can also be limited by the virtual reality input device.

The virtual reality display device can be a virtual reality (VR) head-mounted display device such as a VR head-mounted display (VR glasses or a VR helmet). By using the VR head-mounted display as an example, the device closes people's vision and hearing to the external environment, thus giving the user the feeling of being in a virtual environment. The display principle is that images for left and right eyes are displayed respectively on left-eye and right-eye screens, and a three-dimensional sense is generated in the brain after such differentiated information is acquired by the human eyes.

The virtual reality input device is a device that can map environment data of the real world to a virtual world, that is, a device for inputting a user instruction to a VR system. Different from a keyboard and mouse, the virtual reality input device emphasizes a sense of immersion. The virtual reality input device includes, but is not limited to, gloves, a joystick, two joysticks, a full-body suit, and the like. With the development of virtual display technologies, there are increasing numbers of virtual reality input devices for users to use. For example, a conventional joystick combined with an inertial sensor and a vibration motor is used as a virtual reality input device, and such an input device is generally operated using a conventional button/rocker/touch panel and implements interaction by vibration.

When the user modifies the original three-dimensional model using the virtual reality input device, in the method according to the embodiment of this application, the received user instruction information further needs to be parsed to obtain a parsed user instruction, e.g., a user instruction for modifying the color of the original three-dimensional model, adding new model data, or the like.

After the model submission instruction for the newly-built three-dimensional model submitted by the user is received through step S101, the next step can be performed to acquire modification information of the newly-built three-dimensional model relative to the original three-dimensional model.

In step S103, the modification information of the newly-built three-dimensional model relative to the original three-dimensional model is acquired.

During specific implementation, the modification information of the newly-built three-dimensional model relative to the original three-dimensional model can be acquired by: first acquiring the model data of the newly-built three-dimensional model and the model data of the original three-dimensional model; and then comparing the two types of model data to obtain the modification information of the newly-built three-dimensional model relative to the original three-dimensional model.

If the original three-dimensional model specifically has the modification limit information, as a preferred solution, after step S101, the method can further include the following steps: judging according to the modification limit information of the original three-dimensional model whether an unmodifiable model component in the original three-dimensional model is modified; and if yes, providing the user with prompt information about out-of-limit modification. In this processing manner, out-of-limit modification of the original three-dimensional model can be avoided effectively.

In step S105, the model submission request is sent to the server.

At the least, the modification information of the newly-built three-dimensional model relative to the original three-dimensional model is carried by the model submission request. The modification information includes, but is not limited to, at least one piece of the following modification information: model data corresponding to a new component of the newly-built three-dimensional model relative to the original three-dimensional model, and location information of the new component in the newly-built three-dimensional model; a component identifier of a deleted component of the newly-built three-dimensional model relative to the original three-dimensional model; and a component identifier of a data-modified component of the newly-built three-dimensional model relative to the original three-dimensional model, and the modified model data.

Dependency information indicating that the newly-built three-dimensional model is constructed based on the original three-dimensional model further needs to be carried by the model submission request. For example, the model identifier of the original three-dimensional model is carried by the model submission request, or model data of the original three-dimensional model is carried directly, and the model data is specified as the model data of the original three-dimensional model.

Moreover, when constructing the newly-built three-dimensional model, the user may mark each model component as modifiable or unmodifiable or may even define how the model component is modified (e.g., only the location of the model component can be changed, and it cannot be deleted), and the information also needs to be stored as the modification limit information of the newly-built three-dimensional model. The modification limit information includes: information of at least one unmodifiable model component. Therefore, before step S105, the method according to the embodiment of this application can further include the following step: acquiring the modification limit information of the newly-built three-dimensional model, wherein correspondingly, the modification limit information of the newly-built three-dimensional model is also carried by the model submission request.

The process of a user constructing a new model based on an original three-dimensional model and the process of a user client terminal sending a model submission request to a model storage server are illustrated below through a complete example. It is assumed that an original three-dimensional model is three-dimensional model data of a house structure constructed by a property developer through a three-dimensional modeling tool, and a decoration company constructs a modified house model based on the original three-dimensional model. The two pieces of model data are both stored in a three-dimensional model base of the model storage server in a model-referenced data format. A householder intends to purchase furniture on an e-commerce website. In this case, the householder can use a customized three-dimensional modeling tool (the tool is added with a model import function and a model submit function based on a conventional three-dimensional modeling tool) deployed in their personal computer to first import the decorated house model pre-stored in the model storage server, then import a three-dimensional model of a piece of furniture designated by the householder and pre-stored in an e-commerce server, add the three-dimensional model of the furniture into the decorated house model through the three-dimensional modeling tool, and designate the furniture model as modifiable, at which point the user's new model construction action ends. The new model is constructed based on the decorated house model, and a new model component "furniture model" is imported. At this time, the user can submit a model submission instruction for the newly-built three-dimensional model to the three-dimensional modeling tool. After receiving the model submission instruction, the three-dimensional modeling tool first acquires modification information of the newly-built three-dimensional model relative to the "decorated house model." The modification information includes model data of the "furniture model" and location information of the "furniture model" in the newly-built three-dimensional model. Then, the three-dimensional modeling tool can send a model submission request for the newly-built three-dimensional model to the model storage server. After receiving the request, the model storage server stores thethe model identifier of the "decorated house model" and the modification information as model data of the newly-built three-dimensional model. After that, if a family member of the householder wants to view the three-dimensional model constructed by the householder, the method according to the embodiment of this application can be used to first view the three-dimensional model constructed by the householder and to make modifications on this basis to construct a new model. It should be noted that the family member of the householder can only modify the furniture, for example, modify sofa A selected by the householder to sofa B. During the foregoing operation, the user can view the model through a virtual reality display device and construct a new model through a virtual reality input device.

Another three-dimensional model constructing method is provided in the foregoing embodiment, and correspondingly, another three-dimensional model constructing apparatus is further provided in an embodiment of this application. This apparatus corresponds to the foregoing embodiment of the method.

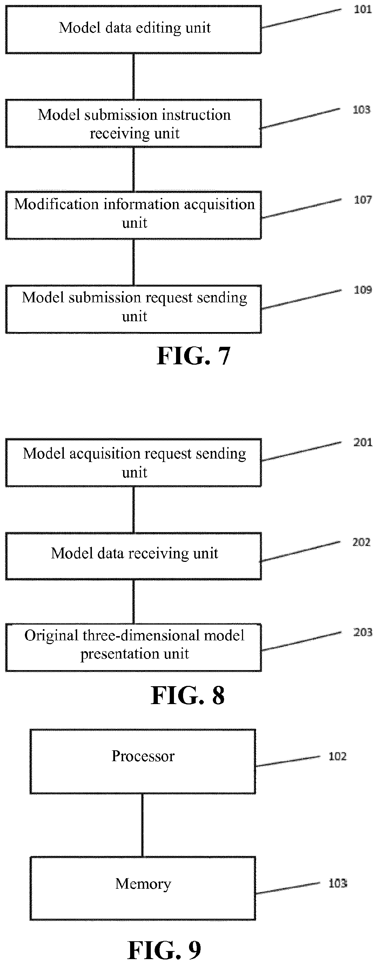

Referring to FIG. 7, a schematic diagram of another embodiment of a three-dimensional model constructing apparatus according to an embodiment of this application is shown. The apparatus embodiment is basically similar to the method embodiment, so it is described simply, and for related parts, it is sufficient to refer to the descriptions of the parts in the method embodiment. The apparatus embodiment described below is merely illustrative.

Another three-dimensional model constructing apparatus according to this embodiment includes: a model data editing unit 101 configured to construct the newly-built three-dimensional model based on an original three-dimensional model; a model submission instruction receiving unit 103 configured to receive a model submission instruction for the newly-built three-dimensional model submitted by a user; a modification information acquisition unit 105 configured to acquire modification information of the newly-built three-dimensional model relative to the original three-dimensional model; and a model submission request sending unit 107 configured to send to the server a model submission request for the newly-built three-dimensional model, wherein the modification information of the newly-built three-dimensional model relative to the original three-dimensional model is carried by the first model submission request.

The three-dimensional model constructing apparatus according to the embodiment of this application can be constructed based on an existing three-dimensional modeling tool (e.g., 3D Studio MAX, or a game engine editor, or the like). For example, a game engine editor (such as Unity) is used as the model data editing unit 101, and the model submission instruction receiving unit 103, the modification information acquisition unit 105, and the model submission request sending unit 107 are constructed separately. Then, the model submission instruction receiving unit 103, the modification information acquisition unit 105, and the model submission request sending unit 107 are integrated into the game engine editor as plug-ins, thus constructing the three-dimensional model constructing apparatus according to the embodiment of this application.

Referring to FIG. 8, a specific schematic diagram of another embodiment of a three-dimensional model constructing apparatus according to an embodiment of this application is shown. Optionally, the apparatus further includes:
a model acquisition request sending unit 201 configured to send to the server a model acquisition request for the original three-dimensional model;
a model data receiving unit 203 configured to receive model data of the original three-dimensional model returned by the server; and
an original three-dimensional model presentation unit 205 configured to present the original three-dimensional model according to the received model data.

The model acquisition request sending unit 201, the model data receiving unit 203, and the original three-dimensional model presentation unit 205 can be integrated into the game engine editor as plug-ins, such that the user client terminal can import the original three-dimensional model from the server to construct a new model based on the original three-dimensional model.

Optionally, the model data receiving unit 203 is specifically configured to receive the model data of the original three-dimensional model and the modification limit information of the original three-dimensional model returned by the server.

Optionally, the original three-dimensional model presentation unit 205 includes:
an information acquisition sub-unit configured to acquire, according to the modification limit information, a component identifier of an unmodifiable model component in the original three-dimensional model; and
a model presentation sub-unit configured to present the original three-dimensional model according to the received model data, and set the unmodifiable model component to an unmodifiable state during presentation of the original three-dimensional model.

Optionally, the apparatus further includes:
a detection prompting unit configured to judge according to the modification limit information whether an unmodifiable model component in the original three-dimensional model is modified; and if yes, provide the user with prompt information about out-of-limit modification.

Optionally, the received model data includes model reference -type model data; and
the original three-dimensional model presentation unit 205 includes:
a data parsing sub-unit configured to parse the received model data to obtain parsed model data; and
a model presentation sub-unit configured to present the original three-dimensional model according to the parsed model data.

Optionally, the original three-dimensional model presentation unit 205 is specifically configured to present a virtual-reality original three-dimensional model according to the received model data.

Optionally, the apparatus further includes:
a modification limit information acquisition unit configured to acquire the modification limit information of the newly-built three-dimensional model;
correspondingly, the modification limit information of the newly-built three-dimensional model is further carried by the model submission request.

Optionally, the modification limit information includes information of at least one unmodifiable model component.

Optionally, the modification information includes at least one piece of the following modification information: model data and location information corresponding to a new component, a component identifier of a deleted component, and a component identifier of a modified component and modified model data.

Referring to FIG. 9, a schematic diagram of an embodiment of an electronic device according to an embodiment of this application is shown. The device embodiment is basically similar to the method embodiment, so it is described simply, and for related parts, it is sufficient to refer to the descriptions of the parts in the method embodiment. The device embodiment described below is merely illustrative.

The electronic device in this embodiment includes: a processor 102; and a memory 103.

The memory 103 is configured to store a program for implementing a three-dimensional model constructing method, and the device performs the following steps after it is powered on and the program of the three-dimensional model constructing method is run through the processor:
receiving a model submission instruction for a newly-built three-dimensional model submitted by a user, wherein the newly-built three-dimensional model is constructed based on an original three-dimensional model;
acquiring modification information of the newly-built three-dimensional model relative to the original three-dimensional model; and
sending to a server a model submission request for the newly-built three-dimensional model, wherein the modification information of the newly-built three-dimensional model relative to the original three-dimensional model is carried by the first model submission request.

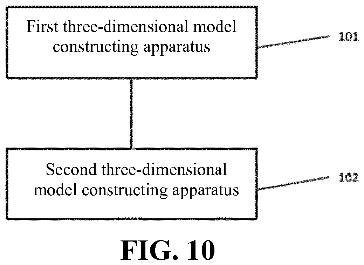

A three-dimensional model constructing system is further provided in an embodiment of this application, as shown in FIG. 10. The system includes the first three-dimensional model constructing apparatus 101 and the second three-dimensional model constructing apparatus 102. The first three-dimensional model constructing apparatus 101 is generally but not exclusively deployed in a server; it can also be deployed in any device capable of implementing the first three-dimensional model constructing method. The second three-dimensional model constructing apparatus 102 is generally deployed in a terminal device such as a personal computer and a notebook computer.

For example, the second three-dimensional model constructing apparatus 102 is deployed on a personal computer. The user first constructs a newly-built three-dimensional model based on an original three-dimensional model through three-dimensional modeling software. After the newly-built three-dimensional model is constructed, the user submits a model submission instruction for the newly-built three-dimensional model to the second three-dimensional model constructing apparatus 102. After receiving the model submission instruction, the second three-dimensional model constructing apparatus 102 will acquire modification information of the newly-built three-dimensional model relative to the original three-dimensional model, and send to a server a model submission request for the newly-built three-dimensional model, wherein the modification information of the newly-built three-dimensional model relative to original three-dimensional model is carried by the request. The first three-dimensional model constructing apparatus 101 is deployed on the server, receives the model submission request for the newly-built three-dimensional model sent by the user client terminal, and stores the model identifier of the original three-dimensional model and the modification information as model data of the newly-built three-dimensional model.

In the method, apparatus, and three-dimensional model constructing system according to the embodiments of this application, a model submission request for a newly-built three-dimensional model sent by a user client terminal is received, wherein the newly-built three-dimensional model is constructed based on an original three-dimensional model; and modification information of the newly-built three-dimensional model relative to the original three-dimensional model and the model identifier of the original three-dimensional model are stored as model data of the newly-built three-dimensional model. By using the method, apparatus, and three-dimensional model constructing system according to the embodiments of this application, three-dimensional model data is stored hierarchically by referenced storage, and thus the pressure of storing a three-dimensional model can be reduced effectively. Moreover, modification limit information of the newly-built three-dimensional model can further be carried by a model submission request sent by the user client terminal and then stored. In this processing manner, a user cannot edit the model randomly while constructing a new model based on the model. Therefore, the manner of modifying the three-dimensional model can be controlled effectively.

The embodiments of this application are disclosed as the preferred embodiments in the foregoing, but they are not intended to limit this application. Any person skilled in the art can make possible variations and modifications without departing from the spirit and scope of the embodiments of this application. Therefore, the protection scope of the embodiments of this application should be subject to the scope defined by the claims of this application.

In a typical configuration, a computing device includes one or more processors (CPU), an input/output interface, a network interface, and a memory.

The memory may be in the form of volatile memory, random access memory (RAM), and/or non-volatile memory, such as read only memory (ROM) or flash RAM, in computer readable media. Memory is an example of a computer readable medium.
1. Computer readable media include non-volatile and volatile media as well as movable and non-movable media, and may achieve information storage by means of any method or technology. Information may be computer readable instructions, data structures, program modules, or other data. Examples of computer storage media include, without limitation, phase change memory (PRAM), static random access memory (SRAM), dynamic random access memory (DRAM) and other types of random access memory (RAM), read-only memory (ROM), electrically erasable programmable read-only memory (EEPROM), flash memory or other memory technologies, compact disk read-only memory (CD-ROM), digital versatile disc (DVD) or other optical storage, cassette tape, magnetic tape/magnetic disk storage or other magnetic storage devices, or any other non-transmission medium. They may be used to store information accessible to the computing device. According to the definition in this text, computer-readable media do not include transitory media, such as modulated data signals and carriers.
2. Those skilled in the art should understand that the embodiments of this application may be provided as methods, systems, or computer program products. Therefore, the embodiments of this application may be implemented as a pure hardware embodiment, a pure software embodiment, or an embodiment combining software and hardware. Moreover, the embodiments of this application may be in the form of a computer program product implemented on one or more computer-usable storage media (including, but not limited to, magnetic disk memory, CD-ROM, optical memory and the like) that contain computer-usable program codes.

## Claims

1. A computer implemented three-dimensional model constructing method, comprising:
receiving a model submission instruction for a newly-built three-dimensional model submitted by a user, wherein the newly-built three-dimensional model is constructed based on an original three-dimensional model;
acquiring modification information of the newly-built three-dimensional model relative to the original three-dimensional model; and
sending a model submission request for the newly-built three-dimensional model to a server, wherein the modification information of the newly-built three-dimensional model relative to the original three-dimensional model is carried by the first model submission request; **characterized by**:
wherein before the receiving of a model submission request for a newly-built three-dimensional model submitted by a user, sending a model acquisition request for the original three-dimensional model to the server;
receiving model data of the original three-dimensional model returned by the server; and
presenting the original three-dimensional model according to the received model data;
wherein the receiving of model data of the original three-dimensional model returned by the server is implemented by:
receiving the model data of the original three-dimensional model and the modification limit information of the original three-dimensional model returned by the server;
wherein the modification limit information includes information of at least one unmodifiable model component for controlling the manner of modifying the original three-dimensional model.

2. The three-dimensional model constructing method according to claim 1, wherein the presenting of the original three-dimensional model according to the received model data comprises:
acquiring a component identifier of an unmodifiable model component in the original three-dimensional model according to the modification limit information; and
presenting the original three-dimensional model according to the received model data,and setting the unmodifiable model component to an unmodifiable state during presentation of the original three-dimensional model.

3. The three-dimensional model constructing method according to claim 1, after the receiving of a model submission instruction for a newly-built three-dimensional model submitted by a user, further comprising:
judging according to the modification limit information whether the unmodifiable model component in the original three-dimensional model is modified; and if yes, providing the user with prompt information about out-of-limit modification.

4. The three-dimensional model constructing method according to claim 1, wherein the received model data comprises model-referenced model data; and
the presenting of the original three-dimensional model according to the received model data comprises:
parsing the received model data to obtain parsed model data; and
presenting the original three-dimensional model according to the parsed model data.

5. The three-dimensional model constructing method according to claim 1, wherein the presenting of the original three-dimensional model according to the received model data is implemented by:
presenting a virtual-reality original three-dimensional model according to the received model data.

6. The three-dimensional model constructing method according to claim 1, before the sending of a model submission request for the newly-built three-dimensional model to the server, further comprising:
acquiring modification limit information of the newly-built three-dimensional model;
correspondingly, the modification limit information of the newly-built three-dimensional model is further carried by the model submission request.

7. The three-dimensional model constructing method according to claim 1 or 6, wherein the modification limit information comprises information of at least one unmodifiable model component.

8. The three-dimensional model constructing method according to claim 1, wherein the modification information comprises at least one piece of the following modification information: model data and location information corresponding to a new component, a component identifier of a deleted component, and a component identifier of a modified component and modified model data.

9. A three-dimensional model constructing apparatus, comprising:
a model data editing unit (101) configured to construct a newly-built three-dimensional model based on an original three-dimensional model;
a model submission instruction receiving unit (103) configured to receive a model submission instruction for the newly-built three-dimensional model submitted by a user;
a modification information acquisition unit (105) configured to acquire modification information of the newly-built three-dimensional model relative to the original three-dimensional model;
a model submission request sending unit (107) configured to send a model submission request for the newly-built three-dimensional model to a server, wherein the modification information of the newly-built three-dimensional model relative to the original three-dimensional model is carried by the first model submission request;
a model acquisition request sending unit (201) configured to send a model acquisition request for the original three-dimensional model to the server;
**characterized by**:
a model data receiving unit (203) configured to receive model data of the original three-dimensional model returned by the server; and
an original three-dimensional model presentation unit (205) configured to present the original three-dimensional model according to the received model data;
wherein the received model data of the original three-dimensional model comprises modification limit information of the original three-dimensional model returned by the server; and
wherein the modification limit information includes information of at least one unmodifiable model component for controlling the manner of modifying the original three-dimensional model

10. The three-dimensional model constructing apparatus according to claim 9, wherein the model data receiving unit (203) is specifically configured to receive the model data of the original three-dimensional model and the modification limit information of the original three-dimensional model returned by the server; and
the apparatus further comprises:
a detection prompting unit configured to judge according to the modification limit information whether an unmodifiable model component in the original three-dimensional model is modified; and if yes, provide the user with prompt information about out-of-limit modification.

## Patentansprüche

1. Computerimplementierte Methode für die Konstruktion eines dreidimensionalen Modells, umfassend:
Empfangen einer Modellübermittlungsanweisung für ein neu erstelltes dreidimensionales Modell, die von einem Benutzer übermittelt wurde, wobei das neu erstellte dreidimensionale Modell auf der Grundlage eines ursprünglichen dreidimensionalen Modells konstruiert wird;
Erfassen von Änderungsinformationen des neu erstellten dreidimensionalen Modells relativ zum ursprünglichen dreidimensionalen Modell; und
Senden einer Modellübermittlungsanforderung für das neu erstellte dreidimensionale Modell an einen Server, wobei die Änderungsinformationen des neu erstellten dreidimensionalen Modells relativ zum ursprünglichen dreidimensionalen Modell in der ersten Modellübermittlungsanforderung enthalten sind;
**gekennzeichnet durch**:
wobei vor dem Empfang einer Modellübermittlungsanforderung für ein neu erstelltes dreidimensionales Modell, die von einem Benutzer übermittelt wurde, Senden einer Modellerfassungsanforderung für das ursprüngliche dreidimensionale Modell an den Server;
Empfangen von Modelldaten des ursprünglichen dreidimensionalen Modells, die vom Server zurückgegeben werden; und
Präsentieren des ursprünglichen dreidimensionalen Modells gemäß den empfangenen Modelldaten;
wobei das Empfangen von Modelldaten des ursprünglichen dreidimensionalen Modells, die vom Server zurückgegeben werden, implementiert wird **durch**:
Empfangen der Modelldaten des ursprünglichen dreidimensionalen Modells und der vom Server zurückgegebenen Änderungsgrenzinformationen des ursprünglichen dreidimensionalen Modells;
wobei die Änderungsgrenzinformationen Informationen über mindestens eine nicht veränderbare Modellkomponente zum Steuern der Art und Weise des Änderns des ursprünglichen dreidimensionalen Modells beinhalten.

2. Methode für die Konstruktion eines dreidimensionalen Modells nach Anspruch 1, wobei das Präsentieren des ursprünglichen dreidimensionalen Modells gemäß den empfangenen Modelldaten Folgendes umfasst:
Erfassen einer Komponentenkennung einer nicht veränderbaren Modellkomponente im ursprünglichen dreidimensionalen Modell gemäß den Änderungsgrenzinformationen; und
Präsentieren des ursprünglichen dreidimensionalen Modells gemäß den empfangenen Modelldaten und Versetzen der nicht veränderbaren Modellkomponente in einen nicht veränderbaren Zustand während der Präsentation des ursprünglichen dreidimensionalen Modells,

3. Methode für die Konstruktion eines dreidimensionalen Modells nach Anspruch 1, nach dem Empfangen einer Modellübermittlungsanweisung für ein neu erstelltes dreidimensionales Modell, die von einem Benutzer übermittelt wurde, ferner umfassend:
Beurteilen gemäß den Änderungsgrenzinformationen, ob die nicht veränderbare Modellkomponente im ursprünglichen dreidimensionalen Modell geändert wurde; und wenn ja, Bereitstellen umgehender Informationen für den Benutzer über Änderungen außerhalb der Grenzen.

4. Methode für die Konstruktion eines dreidimensionalen Modells nach Anspruch 1, wobei die empfangenen Modelldaten modellbezogene Modelldaten umfassen; und
das Präsentieren des ursprünglichen dreidimensionalen Modells gemäß den empfangenen Modelldaten Folgendes umfasst:
Parsen der empfangenen Modelldaten, um geparste Modelldaten zu erhalten; und
Präsentieren des ursprünglichen dreidimensionalen Modells gemäß den geparsten Modelldaten.

5. Methode für die Konstruktion eines dreidimensionalen Modells nach Anspruch 1, wobei das Präsentieren des ursprünglichen dreidimensionalen Modells gemäß den empfangenen Modelldaten implementiert wird durch:
Präsentieren eines ursprünglichen dreidimensionalen Modells in virtueller Realität gemäß den empfangenen Modelldaten.

6. Methode für die Konstruktion eines dreidimensionalen Modells nach Anspruch 1, vor dem Senden einer Modellübermittlungsanforderung für das neu erstellte dreidimensionale Modell an den Server, ferner umfassend:
Erfassen von Änderungsgrenzinformationen des neu erstellten dreidimensionalen Modells;
dementsprechend sind die Änderungsgrenzinformationen des neu erstellten dreidimensionalen Modells weiterhin in der Modellübermittlungsanforderung enthalten.

7. Methode für die Konstruktion eines dreidimensionalen Modells nach Anspruch 1 oder 6, wobei die Änderungsgrenzinformationen Informationen über mindestens eine nicht veränderbare Modellkomponente umfassen.

8. Methode für die Konstruktion eines dreidimensionalen Modells nach Anspruch 1, wobei die Änderungsinformationen mindestens einen Teil der folgenden Änderungsinformationen umfassen: Modelldaten und Standortinformationen, die einer neuen Komponente entsprechen, eine Komponentenkennung einer gelöschten Komponente und eine Komponentenkennung einer geänderten Komponente und geänderter Modelldaten.

9. Einrichtung für die Konstruktion eines dreidimensionalen Modells, umfassend:
eine Modelldatenbearbeitungseinheit (101), die so konfiguriert ist, dass sie ein neu erstelltes dreidimensionales Modell auf der Grundlage eines ursprünglichen dreidimensionalen Modell konstruiert;
eine Modellübermittlungsanweisungs-Empfangseinheit (103), die so konfiguriert ist, dass sie eine von einem Benutzer übermittelte Modellübermittlungsanweisung für das neu erstellte dreidimensionale Modell empfängt;
eine Änderungsinformationserfassungseinheit (105), die so konfiguriert ist, dass sie Änderungsinformationen des neu erstellten dreidimensionalen Modells relativ zum ursprünglichen dreidimensionalen Modell erfasst;
eine Modellübermittlungsanforderungs-Sendeeinheit (107), die so konfiguriert ist, dass sie eine Modellübermittlungsanforderung für das neu erstellte dreidimensionale Modell an einen Server sendet, wobei die Änderungsinformationen des neu erstellten dreidimensionalen Modells relativ zum ursprünglichen dreidimensionalen Modell in der ersten Modellübermittlungsanforderung enthalten sind;
eine Modellerfassungsanforderungs-Sendeeinheit (201), die so konfiguriert ist, dass sie eine Modellerfassungsanforderung für das ursprüngliche dreidimensionale Modell an den Server sendet;
**gekennzeichnet durch**:
eine Modelldaten-Empfangseinheit (203), die so konfiguriert ist, dass sie Modelldaten des ursprünglichen dreidimensionalen Modells empfängt, die vom Server zurückgegeben werden; und
eine Präsentationseinheit (205) für das ursprüngliche dreidimensionale Modell, die so konfiguriert ist, dass sie das ursprüngliche dreidimensionale Modell gemäß den empfangenen Modelldaten präsentiert;
wobei die empfangenen Modelldaten des ursprünglichen dreidimensionalen Modells vom Server zurückgegebene Änderungsgrenzinformationen des ursprünglichen dreidimensionalen Modells umfassen; und
wobei die Änderungsgrenzinformationen Informationen über mindestens eine nicht veränderbare Modellkomponente zum Steuern der Art und Weise des Änderns des ursprünglichen dreidimensionalen Modells beinhalten.

10. Einrichtung für die Konstruktion eines dreidimensionalen Modells nach Anspruch 9, wobei die Modelldaten-Empfangseinheit (203) speziell so konfiguriert ist, dass sie die Modelldaten des ursprünglichen dreidimensionalen Modells und die Änderungsgrenzinformationen des ursprünglichen dreidimensionalen Modells empfängt, die vom Server zurückgegeben werden; und
die Einrichtung ferner Folgendes umfasst:
eine Erkennungsaufforderungseinheit, die so konfiguriert ist, dass sie gemäß den Änderungsgrenzinformationen beurteilt, ob eine nicht veränderbare Modellkomponente im ursprünglichen dreidimensionalen Modell geändert wurde; und wenn ja, dem Benutzer umgehende Informationen über Änderungen außerhalb der Grenzen bereitstellt.

## Revendications

1. Procédé de construction de modèle tridimensionnel mis en oeuvre par ordinateur, comprenant :
la réception d'une instruction de soumission de modèle pour un modèle tridimensionnel nouvellement construit soumis par un utilisateur, dans lequel le modèle tridimensionnel nouvellement construit est construit sur la base d'un modèle tridimensionnel d'origine ;
l'acquisition d'informations de modification du modèle tridimensionnel nouvellement construit par rapport au modèle tridimensionnel d'origine ; et
l'envoi d'une demande de soumission de modèle pour le modèle tridimensionnel nouvellement construit à un serveur, dans lequel les informations de modification du modèle tridimensionnel nouvellement construit par rapport au modèle tridimensionnel d'origine sont transportées par la première demande de soumission de modèle ;
**caractérisé par** :
dans lequel avant la réception d'une demande de soumission de modèle pour un modèle tridimensionnel nouvellement construit soumis par un utilisateur, l'envoi d'une demande d'acquisition de modèle pour le modèle tridimensionnel d'origine au serveur ;
la réception de données de modèle du modèle tridimensionnel d'origine renvoyées par le serveur ; et
la présentation du modèle tridimensionnel d'origine selon les données de modèle reçues ;
dans lequel la réception des données de modèle du modèle tridimensionnel d'origine renvoyées par le serveur est mise en oeuvre par :
la réception des données de modèle du modèle tridimensionnel d'origine et des informations de limite de modification du modèle tridimensionnel d'origine renvoyées par le serveur ;
dans lequel les informations de limite de modification comprennent des informations d'au moins un composant de modèle non modifiable pour commander la manière de modifier le modèle tridimensionnel d'origine.

2. Procédé de construction de modèle tridimensionnel selon la revendication 1, dans lequel la présentation du modèle tridimensionnel d'origine selon les données de modèle reçues comprend
l'acquisition d'un identifiant de composant d'un composant de modèle non modifiable dans le modèle tridimensionnel d'origine en fonction des informations de limite de modification ; et
la présentation du modèle tridimensionnel d'origine en fonction des données de modèle reçues, et le réglage du composant de modèle non modifiable dans un état non modifiable pendant la présentation du modèle tridimensionnel d'origine.

3. Procédé de construction de modèle tridimensionnel selon la revendication 1, après la réception d'une instruction de soumission de modèle pour un modèle tridimensionnel nouvellement construit soumis par un utilisateur, comprenant en outre :
l'évaluation, en fonction des informations de limite de modification, si le composant de modèle non modifiable dans le modèle tridimensionnel d'origine est modifié ; et si tel est le cas, la fourniture à l'utilisateur d'informations de requête concernant une modification hors limite.

4. Procédé de construction de modèle tridimensionnel selon la revendication 1, dans lequel les données de modèle reçues comprennent des données de modèle référencées par un modèle ; et
la présentation du modèle tridimensionnel d'origine en fonction des données de modèle reçues comprend :
l'analyse des données de modèle reçues pour obtenir des données de modèle analysées ; et
la présentation du modèle tridimensionnel d'origine en fonction des données de modèle analysées.

5. Procédé de construction de modèle tridimensionnel selon la revendication 1, dans lequel la présentation du modèle tridimensionnel d'origine selon les données de modèle reçues est mise en oeuvre par :
la présentation d'un modèle tridimensionnel d'origine de réalité virtuelle en fonction des données de modèle reçues.

6. Procédé de construction de modèle tridimensionnel selon la revendication 1, avant l'envoi d'une demande de soumission de modèle pour le modèle tridimensionnel nouvellement construit au serveur, comprenant en outre :
l'acquisition d'informations de limite de modification du modèle tridimensionnel nouvellement construit ;
en conséquence, les informations de limite de modification du modèle tridimensionnel nouvellement construit sont en outre transportées par la demande de soumission de modèle.

7. Procédé de construction de modèle tridimensionnel selon la revendication 1 ou 6, dans lequel les informations de limite de modification comprennent des informations d'au moins un composant de modèle non modifiable,

8. Procédé de construction de modèle tridimensionnel selon la revendication 1, dans lequel les informations de modification comprennent au moins un élément des informations de modification suivantes : données de modèle et informations d'emplacement correspondant à un nouveau composant, un identifiant de composant d'un composant supprimé et un identifiant de composant d'un composant modifié et de données de modèle modifiées.

9. Appareil de construction de modèle tridimensionnel, comprenant :
une unité d'édition de données de modèle (101) configurée pour construire un modèle tridimensionnel nouvellement construit sur la base d'un modèle tridimensionnel d'origine ;
une unité de réception d'instruction de soumission de modèle (103) configurée pour recevoir une instruction de soumission de modèle pour le modèle tridimensionnel nouvellement construit soumis par un utilisateur ;
une unité d'acquisition d'informations de modification (105) configurée pour acquérir des informations de modification du modèle tridimensionnel nouvellement construit par rapport au modèle tridimensionnel d'origine ;
une unité d'envoi de demande de soumission de modèle (107) configurée pour envoyer une demande de soumission de modèle pour le modèle tridimensionnel nouvellement construit à un serveur, dans lequel les informations de modification du modèle tridimensionnel nouvellement construit par rapport au modèle tridimensionnel d'origine sont transportées par la première demande de soumission de modèle ;
une unité d'envoi de demande d'acquisition de modèle (201) configurée pour envoyer une demande d'acquisition de modèle pour le modèle tridimensionnel d'origine au serveur ;
**caractérisé par** :
une unité de réception de données de modèle (203) configurée pour recevoir des données de modèle du modèle tridimensionnel d'origine renvoyées par le serveur ; et
une unité de présentation de modèle tridimensionnel d'origine (205) configurée pour présenter le modèle tridimensionnel d'origine en fonction des données de modèle reçues ;
dans lequel les données de modèle reçues du modèle tridimensionnel d'origine comprennent des informations de limite de modification du modèle tridimensionnel d'origine renvoyées par le serveur ; et
dans lequel les informations de limite de modification comprennent des informations d'au moins un composant de modèle non modifiable pour commander la manière de modifier le modèle tridimensionnel d'origine.

10. Appareil de construction de modèle tridimensionnel selon la revendication 9, dans lequel l'unité de réception de données de modèle (203) est spécifiquement configurée pour recevoir les données de modèle du modèle tridimensionnel d'origine et les informations de limite de modification du modèle tridimensionnel d'origine renvoyées par le serveur; et
l'appareil comprend en outre :
une unité de requête de détection configurée pour évaluer, en fonction des informations de limite de modification, si un composant de modèle non modifiable dans le modèle tridimensionnel d'origine est modifié ; et si tel est le cas, fournir à l'utilisateur des informations de requête concernant une modification hors limite.
